# EUROPEAN PATENT APPLICATION

(11) **EP 0 911 951 A1**
(43) Date of publication of application: **28.04.1999**
(21) Application number: 98118735.4
(22) Date of filing: 05.10.1998
(51) Int. Cl.: H02M 7/797, H02M 1/00, H02J 3/36

(54) **A device for providing a voltage source converter (VSC) with voltage**

(30) Priority: 10.10.1997 SE 9703685
(71) Applicant: ASEA BROWN BOVERI AB, 721 83 Västeras (SE)
(72) Inventor: Palsson, Rolf, 77204 Saxdalen (SE); Svensson, Kjell, 77141 Ludvika (SE)
(74) Representative: Olsson, Jan

(57) **Abstract**

A device for providing a VSC converter (8) in a plant for transmitting electric power with voltage upon connection of the converter to an active alternating voltage network (1) has in each connection line between each phase of the alternating voltage network and the converter a first breaking means (15-17) adapted to be closed for connection of the respective phase to the converter. The device comprises an additional breaking means (19), which is connected in series with a resistance (18) and adapted to provide the converter with voltage therethrough by connecting only one (4) of the phases of the alternating voltage network to the converter for charging a capacitor (9) of the direct voltage side of the converter through said resistance. The first breaking means (15-17) are closed with a delay with respect to said voltage provision.

## Description

### FIELD OF THE INVENTION AND PRIOR ART

The present invention relates to a device for providing a VSC converter for converting direct voltage into alternating voltage and conversely in a plant for transmitting electric power with voltage, said converter being adapted to be connected to an active alternating voltage network having at least two phases and has a direct voltage side having a direct voltage defined by at least one capacitor by said voltage providing upon connection of the converter to the alternating voltage network, an inductance being arranged between the alternating voltage network and the converter, a first breaking means being arranged in each connection line between each phase of the alternating voltage network and the converter and to be closed for connecting the respective phase to the VSC converter, said device comprising means adapted to conduct current charging said capacitor through a resistance upon said voltage providing.

Such a device may be adapted for providing a VSC converter with voltage, said converter being connected to a direct voltage network for high voltage direct current (HVDC), in which a plant for transmitting electric power between such a direct voltage network and an alternating voltage network has recently become known through the disclosure "PWM and control of two and three-level High Power Voltage Source Converters" by Anders Lindberg, Kungliga Tekniska Högskolan, Stockholm, 1995. However, it is emphasized that the invention is not restricted to this application, but said VSC converter could for example be a part of a SVC (Static Var Compensator), in which the direct voltage side of the converter then is not connected to any direct voltage network, but said capacitor lie freely.

The number of phases of said alternating voltage network and by that the number of phase legs of the VSC converter may be arbitrary, and the invention is directed to a device for providing a VSC converter with voltage, which is adapted to be connected to an alternating voltage network with at least two phases, but there are usually three phases of the alternating voltage network meaning three phase legs of the VSC converter and by that totally six current valves therein, so that the converter constitutes a six-pulse bridge.

Voltage providing means that in a state in which a converter is not connected to said alternating voltage network and there is in principle no direct voltage across said capacitor, the converter is connected to the alternating voltage network and the alternating voltage thereof. Said capacitor will through such a connection of the alternating voltage network be charged through the diodes in the bridge of the converter, since the semiconductor elements of turn-off type, preferably IGBTs, connected in anti-parallel therewith, are blocked and not controllable in this state. Energy is stored in said inductance as a consequence of the charging current, wherein said inductance may be constituted by a transformer or inductors when the converter is without any transformer. This energy will charge the capacitor beyond peak-rectifying when the charging current sinks and cause an over-voltage thereacross. As a consequence thereof said means of devices of the type mentioned in the introduction have been adapted to conduct the current charging said capacitor in said voltage providing through a resistance, which so far has been accomplished at high voltages, e.g. within the range 100 kV to 500 kV, by providing said first breaking means with a resistor to be switched in, which during the very voltage providing is switched in into the connection line (phase leg) in question between the converter and the respective phase of the alternating voltage network so as to reduce the charging current and drastically reduce the energy oscillation between the inductor and the capacitor, and then be disconnected, so that the current in the respective connection line is shunted past the resistor so as to not cause unnecessary losses. Resistors have been incorporated in all the first breaking means, since these have been closed simultaneously and there has not been any knowledge about which of the phases of the alternating voltage network is the first one in the time and by that will initially charge the capacitor. This solution to the problem of over-voltages across the capacitor of the type occurring upon connection of a VSC converter to an active alternating voltage network during providing the converter with voltage is comparatively costly, and it is for the rest normally not accessible for so-called medium voltage breakers, in which medium voltage means a voltage between about 10 and 100 kV.

### SUMMARY OF THE INVENTION

The object of the present invention is to provide a device of the type defined in the introduction, which solves the problems mentioned above of occurrence of over-voltages upon voltage providing of a VSC converter in a simpler and by that less costly way.

This object is according to the invention obtained by providing a device of the type defined in the introduction with also at least one additional breaking means, which is connected in series with said resistance and adapted to provide the VSC converter with voltage therethrough by connecting only one of the phases of the alternating voltage network to the VSC converter for charging the capacitor of the direct voltage side through the resistance, and that it comprises an arrangement adapted to enable closing of said first breaking means for connecting all the phases of the alternating voltage network to the VSC converter with a delay with respect to the provision of voltage through said additional breaking means.

By the arrangement of said additional breaking means and enabling the connection of only one of the phases of the alternating voltage network to the converter in voltage providing thereof by closing this breaking means, it is possible to manage with one single resistance, which is connected in series with said additional breaking means, and this resistance neither has to be incorporated in the very breaking means, so that said device gets considerably less costly than devices of this type known so far. Thus, the very basic idea of the invention is that the charging of said capacitor takes place through one single determined phase of the alternating voltage network and by this only one connection of this phase to the converter has to be provided with a resistor. By closing said first breaking means for connection of all the phases of the alternating voltage network to the converter and by that complete the connection of the alternating voltage network to the converter with a delay with respect to the voltage providing through said additional breaking means, the converter will already be provided with voltage at the time for the connection of the rest of the phases of the alternating voltage network, so that this may take place substantially currentless, since the capacitor is already charged at the time of this connection.

According to a preferred embodiment of the invention the additional breaking means is a disconnector, which is possible since it does not have to be operated when voltage is connected thereto. This makes this means considerably less costly than would it be a breaker.

According to a preferred embodiment of the invention the first breaking means arranged in the connection line to said one of the phases is adapted to establish a connection of the phase to the converter while shunting the resistance upon closing thereof. It is by this achieved that the resistance is only switched in during the very voltage providing and will not cause any unnecessary losses thereafter.

According to another preferred embodiment of the invention said resistance is connected in parallel with one of said first breaking means and the additional breaking means is arranged in the connection line belonging to said one of the phases connected in series with a parallel connection of the resistance and said first breaking means. The invention may by this be realised in a simple way.

According to another preferred embodiment of the invention the device comprises a second breaking means arranged in each connection line between the first breaking means and the respective alternating voltage phase and connected in series with the first breaking means, the first breaking means are disconnectors and the second breaking means are breakers and adapted to be closed before the first breaking means are closed when said voltage providing is carried out. The first breaking means and the additional breaking means are then preferably adapted to achieve a visible isolation of portions of the respective connection line located on both sides thereof in an open state, so that it will be possible to enter and carry out work on the converter.

According to another preferred embodiment of the invention an alternating current filter for eliminating harmonic currents is connected to the connection line belonging to said one phase in a point between the resistance and the second breaking means, which results in the fact that the filter current then has not to flow through the resistor and by that the rated power of the resistor may be reduced considerably and this will by that be less costly.

According to an additional preferred embodiment of the invention, which constitutes a further development of the embodiment last mentioned, said additional breaking means are formed by a second breaking means arranged in the connection line for said one of the phases. This is a possible way of realising said additional breaking means, but this may also be constituted by another breaking means arranged in the connection line belonging to said one of the phases in series with the first breaking means belonging to this phase between the converter and the first breaking means, which constitutes a further preferred embodiment of the invention.

According to another preferred embodiment of the invention the device comprises means adapted to measure the voltage across said capacitor and send information thereabout to said arrangement, and the arrangement is adapted to bring said first breaking means to close when the voltage across said capacitor exceeds a predetermined threshold voltage. It is by this ensured that the charging of the capacitor through said one phase, which is provided with said resistance, is carried out to such a high level that it is not associated with any problems to connect the other phases having no switching-in resistor before this connection is made.

According to another preferred embodiment of the invention the device comprises means adapted to measure the voltage across said capacitor after providing the converter with voltage by closing the additional breaking means and means adapted to measure the time from the start of said voltage providing by connection of said one phase to the converter, and these means are adapted to send information about the voltage and the time to the arrangement and this is adapted to control the additional breaking means to disconnect said one phase from the converter without closing the first breaking means would a predetermined period of time have elapsed after said start without reaching a predetermined value of the voltage across the capacitor. It is by this ensured that any connection of the alternating voltage network to the converter will not take place when any fault has occurred on the direct voltage side, such as an earth fault, which will mean that the voltage across the capacitor will not reach the level desired.

According to a further preferred embodiment of the invention the device is adapted for voltage providing of a VSC converter connected to a direct voltage network for High Voltage Direct Current (HVDC).

Further advantages as well as advantageous features of the invention will appear from the following description and the other dependent claims.

### BRIEF DESCRIPTION OF THE DRAWING

With reference to the appended drawing, below follows a description of preferred embodiments of the invention cited as examples.

In the drawing:
- Fig 1: is a very schematic diagram illustrating a device for voltage providing a VSC converter with voltage according to a first preferred embodiment of the invention, and
- Fig 2: is a view corresponding to Fig 1 of a device according to a second preferred embodiment of the invention.

### DETAILED DESCRIPTION OF PREFERRED EMBODIMENTS OF THE INVENTION

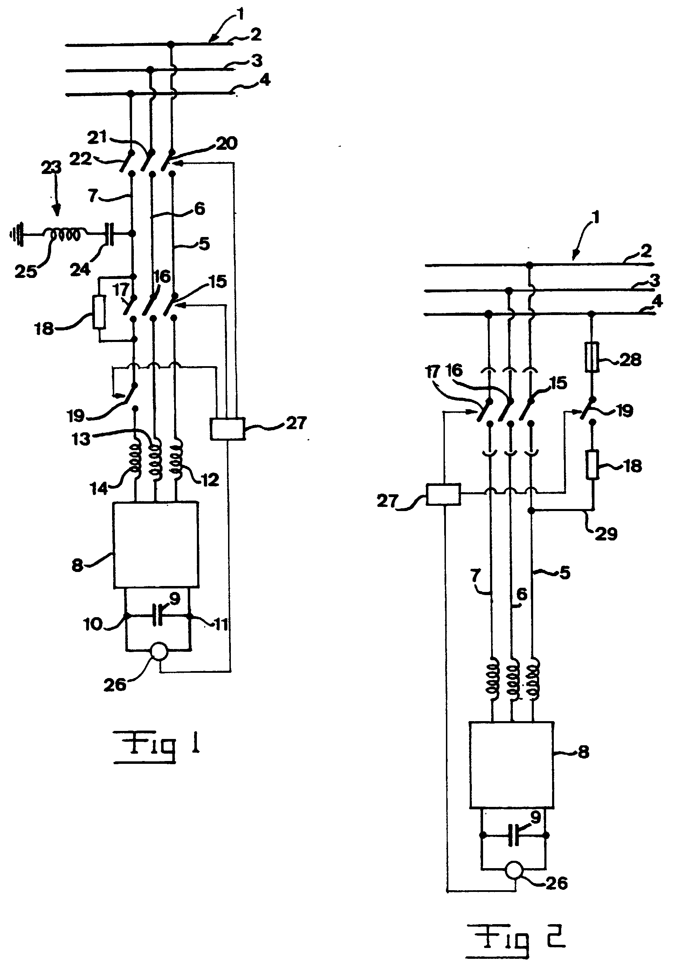

A part of a plant for transmitting electric power, upon which a device according to a first preferred embodiment of the invention is applied, is schematically illustrated in Fig 1, and substantially only those different components which have directly something to do with the function according to the invention or are required for explanation and comprehension of the invention are shown. This plant comprises an alternating voltage network 1, which in the present case have three phases 2, 3, 4. The phases of the alternating voltage network are through a connection line 5, 6, 7 each connected to the alternating voltage side of a VSC converter 8 schematically indicated by a square. The converter 8 is adapted to convert direct voltage into alternating voltage and conversely and is a part of a station not shown adapted for this purpose. The direct voltage side of the converter is a capacitor 9 adapted to define the direct voltage on this side. The terminals 10, 11 of the capacitor may be connected to pole conductors not shown of a direct voltage network for high voltage direct current (HVDC = High Voltage Direct Current) or the capacitor may hang freely should it be a part of a SVC (Static Var Compensator).

Although it is not shown the VSC converter comprises in a conventional way a phase leg for each phase formed by an extension of the connection lines downwardly and having two so-called current valves, which consist of branches of breakers of turn-on and turn-off type connected in series, preferably in the form of IGBTs, and diodes connected in anti-parallel therewith. A great number of IGBTs may be connected in series in one single valve so as to be turned on and turned off simultaneously so as to function as one single breaker, whereby the voltage across the valve may be divided among the different breakers connected in series. The control of the breakers takes place through any kind of pulse width modulation (PWM).

The alternating voltage network 1 is active in this type of plant for transmitting electric power to which the device according to the invention is applied, which means that there is an alternating voltage thereon also if the connection to the converter 8 is broken, while the capacitor 9 is not charged and has no voltage thereacross when the connection to the alternating voltage network is disconnected. As mentioned above, the invention relates to exactly a device for voltage providing of the converter 8 in so-called new-starting of the plant, i.e. the voltage providing of the converter 8 which has to take place when the alternating voltage network 1 is connected thereto.

The converter is in the present case without any transformer and has instead inductors 12, 13, 14 at the alternating voltage side thereof. Would the connection to the alternating voltage network take place suddenly through a direct connection of one or more of the connection lines 5, 6, 7 from the alternating voltage network to the converter, then would firstly as desired the capacitor 9 be charged through the diodes in the respective current valve, but as a consequence of the charging current there is after that energy stored in the inductor or the inductors, so that when the current then sinks this energy will charge the capacitor beyond peak-rectifying and cause an over-voltage. However, the device according to the invention avoids this. The device has for this sake the breaking means arranged in the connection lines in the form of disconnectors 15, 16, 17 adapted to be closed for connection of the respective phase to the converter. These disconnectors as well as the other breaking means shown in the figure are of a mechanical type, and the disconnectors 15-17 are adapted to cause a visible isolation of portions of the respective connection line arranged on both sides thereof in the open state, so that staff may make sure that there is no voltage on the converter side thereof when work is to be carried out there.

A resistor 18 is connected in parallel with one 17 of said disconnectors connected to said one phase 4 of the alternating voltage network. Furthermore, an additional breaking means 19 in the form of a disconnector is connected in series with the parallel connection of the disconnector 17 and the resistor 18 in the connection line 7, more exactly between said parallel connection and the converter. Also, the disconnector 19 has to enable a visible isolation in the open state, since the resistor 18 is connected across the disconnector 17 and short-circuits it.

The device comprises also a second breaking means in the form of a breaker 20, 21, 22 arranged in each connection line between the disconnector 15-17 and the respective alternating voltage phase and connected in series with this disconnector.

It is also indicated how an alternating current filter 23 with capacitance 24 and inductance 25 is connected to the connection line 7 to said one phase 4 between the phase and the parallel connection of the disconnector 17 and the resistor 18.

Finally, the device has means 26 adapted to measure the voltage across the capacitor 9 and send information thereabout to an arrangement 27, which is adapted to control the different breaking means on the basis of information about this voltage and the time elapsed from the connection of the converter 8 to one phase of the alternating voltage network in the way described below.

The function of the device according to the invention is as follows. When the converter 8 is to be connected to the alternating voltage network this is provided with voltage by firstly controlling said disconnector 19 by the arrangement 27 to be closed. The breakers 20-22 are after that closed, which means that the charging current will flow from said one phase 4 of the alternating voltage network through the resistor 18 to the converter 8 and cause a charging of the capacitor 9 and by that an increasing direct voltage thereacross. Thanks to the existence of the resistor 18 the charging current will be maintained at a considerably lower level than otherwise would be the case, and there is no risk for any over-voltage mentioned above. The means 26 will measure the voltage across the capacitor 9 and send information thereabout to the arrangement 27. The arrangement 27 also includes means adapted to measure the time from the closing of the connection line 7 through the disconnector 9 and the breaker 22. The arrangement is adapted to control the breaker 20, 21, 22 to open and by that break the connection between said one phase 4 and the converter 8 in the case that the voltage across the capacitor 9 after a certain period of time has not reached a certain level, since there is then apparantly something wrong, such as for example an earth fault on the direct voltage side of the converter.

However, the arrangement 27 is adapted to cause a closing of said disconnectors 15, 16, 17 in the case that a predetermined threshold voltage for the voltage across the capacitor 9 is exceeded, if this takes place within a certain period of time, normally some hundreds milliseconds, so that the alternating voltage network 1 is then with all the phases completely connected to the converter 8 and the resistor 18 will by that be shunted. No resistor is needed for the phases 2 and 3, since the capacitor will be charged when the disconnectors 15-17 are closed, so that said closing takes places substantially currentless.

By the fact that the alternating current filter 23 is connected to the connection line 7 "before" the resistor 18 harmonic currents (50 or 60 Hz) generated will not flow through the resistor, so that the rated power thereof may be reduced considerably and it may therethrough be made less costly. Alternating current filters are of course also connected to the other phases, but these are not shown in the drawing, since they have nothing to do with the present invention.

A device according to a second preferred embodiment of the invention applied to a plant of the type described with reference to Fig 1 is shown in Fig 2, and the parts of this plant and this device corresponding to such parts in Fig 1 have been provided with the same reference numerals. Said first breaking means 15, 16, 17 are in this case formed by extractable breakers arranged on a carriage, which may be moved out so as to achieve a visible isolation upon disconnection. Said additional breaking means in the form of a disconnector 19 is here connected in series with a resistor 18 and a fuse 28 in a line 29 between the one 4 of the phases of the alternating voltage network and a point between a first breaking means 15 and the converter 8 of one 5 of said connection lines, here the one belonging to another 2 of the phases. Upon provision with voltage through controlling by the arrangement 27 the disconnector will in this case be closed firstly and the capacitor 9 will by that be charged through said one phase 4 through a current through the resistor 18. The arrangement 27 will then in the way described above control the closing of the breaking means 15-17 or an earlier opening of the disconnector 19 through information from the measuring means 26 and about the time elapsed since the closing of the disconnector 19. It is also possible that the arrangement 27 after closing the breakers 15-17 opens the disconnector 19, but this is not necessary.

"Breaking means" is in this disclosure defined as a general definition for all conceivable means with a capability to achieve an interruption of a connection, such as breakers and disconnectors. Breakers are defined as breaking means with a capability to break a current and comprises arc extinguishing means and the like, while disconnectors are normally operated currentless or in some cases under voltage with limited currents and may therefore be made considerably simpler and less costly than breakers.

The time necessary for the different connection procedures described above for complete connection of the converter to the alternating voltage network is typically in the order of seconds. The voltage levels of said network may be 10-500 kV, well 10-30 kV.

The invention is of course not in any way restricted to the preferred embodiments described above, but many possibilities to modifications thereof would be apparent to a man skilled in the art without departing from the basic idea of the invention, such as this is defined in the claims.

It is emphasized that "the arrangement" in the claims also comprises the case in which the different operations mentioned to be done therethrough are carried out by hand by an operator.

The number of phases of the alternating voltage network could for example be another. The same is valid for the capacitor 9, which could be replaced by a plurality of capacitors connected in series, such as two such having a grounded midpoint for potential definition.

## Claims

1. A device for providing a VSC converter (8) for converting direct voltage into alternating voltage and conversely in a plant for transmitting electric power with voltage, said converter being adapted to be connected to an active alternating voltage network (1) having at least two phases (2-4) and has a direct voltage side having a direct voltage defined by at least one capacitor (9) by said voltage providing upon connection of the converter to the alternating voltage network, an inductance (12-14) being arranged between the alternating voltage network and the converter, a first breaking means (15-17) being arranged in each connection line (5-7) between each phase of the alternating voltage network and the converter and to be closed for connecting the respective phase to the VSC converter, said device comprising means adapted to conduct current charging said capacitor through a resistance upon said voltage providing, **characterized** in that it comprises at least an additional breaking means (19), which is connected in series with said resistance (18) and adapted to provide the VSC converter with voltage therethrough by connecting only one (4) of the phases of the alternating voltage network to the VSC converter for charging the capacitor of the direct voltage side through the resistance, and that it comprises an arrangement (27) adapted to enable closing of said first breaking means (15-17) for connecting all the phases of the alternating voltage network to the VSC converter with a delay with respect to the provision of voltage through said additional breaking means.

2. A device according to claim 1, **characterized** in that the additional breaking means (19) is a disconnector.

3. A device according to claim 1 or 2, **characterized** in that the first breaking means (17) arranged in the connection line to said one (4) of the phases is adapted to establish a connection of a phase to the converter (8) while shunting the resistance (18) upon closing thereof.

4. A device according to any of claims 1-3, **characterized** in that said resistance (18) is connected in parallel with one (17) of said first breaking means.

5. A device according to claim 4, **characterized** in that said additional breaking means (19) is arranged in the connection line (7) belonging to said one of the phases connected in series with the parallel connection of the resistance (18) and said first breaking means (17).

6. A device according to claim 4, **characterized** in that said additional breaking means (19) is connected in series with said resistance (18) in a line (29) connecting said one phase of the alternating voltage network with a point between the converter (8) and a said first breaking means (15) of said connection line of one of the phases.

7. A device according to claim 5, **characterized** in that it comprises a second breaking means (20-22) arranged in each connection line between the first breaking means (15-17) and the respective alternating voltage phase (2-4) and connected in series with the first breaking means, that the first breaking means are disconnectors and that the second breaking means are breakers and adapted to be closed before the first breaking means are closed when said voltage providing is carried out.

8. A device according to claim 7, **characterized** in that an alternating current filter (23) for eliminating harmonic currents is connected to the connection line (7) belonging to said one phase (4) in a point between the resistance (18) and the second breaking means.

9. A device according to claim 7, **characterized** in that said additional breaking means is formed by a said second breaking means (22) arranged in the connection line for said one (4) of the phases.

10. A device according to claim 7, **characterized** in that said additional breaking means (19) is arranged in the connection line belonging to said one of the phases in series with the first breaking means (17) belonging to this phase between the converter (8) and the first breaking means.

11. A device according to claim 10, **characterized** in that said arrangement (27) is in said voltage providing adapted to first control said additional breaking means (19) to close, after that all said second breaking means (20-22) to close for voltage providing of the converter by connecting said one (4) of the phases thereto through the resistance (18), and after that with said delay all said first breaking means (15-17) to close for connecting all the phases of the alternating voltage network to the converter.

12. A device according to any of claims 1-11, **characterized** in that it comprises means (26) adapted to measure the voltage across said capacitor (9) and send information thereabout to said arrangement (27), and that the arrangement is adapted to bring said first breaking means (15-17) to close when the voltage across said capacitor exceeds a predetermined threshold voltage.

13. A device according to any of claims 1-12, **characterized** in that it comprises means (26) adapted to measure the voltage across said capacitor after providing the converter with voltage by closing the additional breaking means (19) and means (27) adapted to measure the time from the start of said voltage providing through connection of said one phase (4) to the converter, and that these means are adapted to send information about the voltage and the time to the arrangement (27) and this is adapted to control the additional breaking means (19, 22) to disconnect said one phase from the converter without closing the first breaking means if a predetermined period of time has elapsed after said start without reaching a predetermined value of the voltage across the capacitor (9).

14. A device according to any of claims 1-13, **characterized** in that said first breaking means (15-17) and the additional breaking means (19) are adapted to cause a visible isolation of portions of the respective connection line arranged on both sides thereof in the open state.

15. A device according to any of claims 1-14, **characterized** in that it is adapted for voltage providing of the VSC converter (8) through connection to an alternating voltage network having a voltage of medium level, i.e. between 10 and 100 kV.

16. A device according to any of claims 1-15, **characterized** in that is adapted for voltage providing of a VSC converter (8) connected to a direct voltage network for high voltage direct current (HVDC).

17. A device according to any of claims 1-15, **characterized** in that it is adapted for voltage providing of a VSC converter (8) of a SVC (Static Var Compensator).
